# EUROPÄISCHE PATENTSCHRIFT

(11) **EP 1 512 232 B1**
(45) Veröffentlichungstag und Bekanntmachung des Hinweises auf die Patenterteilung: **01.09.2010**
(21) Anmeldenummer: 03756957.1
(22) Anmeldetag: 02.06.2003
(51) Int. Cl.: H04W 52/32, H04W 88/02

(54) **VERFAHREN UND SYSTEM ZUR STEUERUNG DER SENDELEISTUNG VON GRUPPENNACHRICHTEN UNTERSCHIEDLICHER GRUPPEN**
METHOD AND SYSTEM FOR CONTROLLING THE TRANSMITTING POWER OF GROUP-MESSAGES OF DIFFERENT GROUPS
PROCEDE ET SYSTEME DE REGULATION DE LA PUISSANCE DE SORTIE DE MESSAGES DE GROUPES DE DIFFERENTS GROUPES

(30) Priorität: 07.06.2002 DE 10225433
(43) Veröffentlichungstag der Anmeldung: 09.03.2005
(73) Patentinhaber: SIEMENS AKTIENGESELLSCHAFT, 80333 München (DE)
(72) Erfinder: BIENAS, Maik, 30519 Hannover (DE); ECKERT, Michael, 38122 Braunschweig (DE); SCHMIDT, Holger, 38102 Braunschweig (DE); SCHWAGMANN, Norbert, 38102 Braunschweig (DE); GOTTSCHALK, Thomas, 12524 Berlin (DE)
(86) Internationale Anmeldenummer: PCT/DE2003/001816
(87) Internationale Veröffentlichungsnummer: WO 2003/105367

(56) Entgegenhaltungen:
- EP-A- 1 063 782
- EP-A- 1 143 635
- US-B1- 6 360 076

## Beschreibung

Die vorliegende Erfindung betrifft ein Verfahren und ein System zur Steuerung der Sendeleistung von Gruppennachrichten unterschiedlicher Gruppen in einem Mobilfunksystem.

Derartige Verfahren und Systeme finden unter Anderem in Mobilfunksystemen der dritten Generation, wie beispielsweise UMTS (Universal Mobile Telecommunications System), Anwendung.

Bei vielen in modernen Mobilfunksystemen angebotenen Diensten und Anwendungen sollen Nachrichten nicht nur zu einem, sondern zu zwei und mehreren Mobilfunkteilnehmern übertragen werden. Beispiele für solche Dienste und Anwendungen sind Nachrichtengruppen, Videokonferenzen, Video auf Anfrage oder verteilte Anwendungen. Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über N (N = Anzahl der Empfänger der Nachricht) Einzelverbindungen, sogenannte "Unicast"-Verbindungen, übertragen wird und dabei mehrfach über gemeinsame Verbindungswege gesendet wird, benötigt dieses Verfahren eine sehr hohe Bandbreite. Eine bessere Möglichkeit bietet hier das sogenannte "Multicast"-Übertragungsverfahren. Hierbei werden die verschiedenen Teilnehmer, denen dieselbe Nachricht übermittelt werden soll, zu einer Gruppe, einer sogenannten "Multicast"-Gruppe zusammengefasst, der eine Adresse zugeordnet wird. Die zu übertragenden Daten werden daraufhin nur einmal an diese Multicast-Adresse gesendet. Über gemeinsame Verbindungswege vom Sender zu den Empfängern wird die Multicast-Nachricht im Idealfall nur einmal gesendet. Der Sender muss hierbei nicht wissen, wo und wieviele Empfänger sich hinter der Multicast-Adresse verbergen.

Beim Mobilfunksystem der dritten Generation UMTS erfolgt die Übertragung von Informationen zu einem Anwender durch Reservierung einer physikalischen Ressource. Bei der Übertragung von Daten - egal welcher Art - wird im Mobilfunk zwischen zwei Übertragungsrichtungen unterschieden. Allgemein wird die Datenübertragung von der im Allgemeinen ortsfesten Basisstation (Bezeichnung im GSM-Global System for Mobile Communications) bzw. NodeB (Bezeichnung einer Basisstation in UMTS) zu den mobilen Endgeräten als Übertragung in sogenannter "Downlink"-Richtung, d.h. Abwärtsstrecke, bezeichnet. Bei der Datenübertragung in der Gegenrichtung von einem Endgerät zu der Basisstation spricht man von Übertragung in sogenannter "Uplink"-Richtung, d.h. Aufwärtsstrecke. Bei UMTS sind für die Übertragung über die Luftschnittstelle zwei Modi vorgesehen: Beim Frequenzduplex- (Frequency Division Duplex - FDD) Modus erfolgt die Übertragung in Up- und Downlink-Richtung auf unterschiedlichen Frequenzen, beim Zeitduplex- (Time Division Duplex TDD) Modus wird nur eine Trägerfrequenz verwendet. Durch Zuweisung von Zeitschlitzen erfolgt eine Trennung der Up- und Downlink-Richtung. Die Teilnehmer werden bei beiden Modi durch Aufprägen orthogonaler Codes, sogenannter "Channelization Codes", auf die Informationsdaten getrennt. Dieses Mehrfachzugriffsverfahren ist als CDMA- (Code Division Multiple Access) Verfahren bekannt. Gemäß der technischen Spezifikation TS 25.211 V3.7.0: "Physical Channels and Mapping of Transport Channels onto Physical Channels" des 3rd Generation Partnership Project (3GGP), welche den UMTS-FDD-Modus beschreibt, ist ein physikalischer Kanal, das heißt ein Funkkanal, in der Downlink-Richtung durch Trägerfrequenz, einem Verschlüsselungs-Code (dem sogenannte "Scrambling Code"), einem Kanalisierungscode (dem sogenannten "Channelization Code") und einer Start- und Stopzeit definiert. Für die Uplink-Übertragung hat jede Mobilfunkstation ihren eigenen Scrambling Code. Der Sinn der Scrambling Codes liegt darin, die verschiedenen Mobilfunkstationen trennen zu können.

In UMTS gibt es für die Übertragung von Informationen zwei Arten von Funkkanälen: Dedizierte Kanäle, sogenannte "Dedicated Channels", und gemeinsame Kanäle, sogenannte "Common Channels". Bei den dedizierten Kanälen wird eine physikalische Ressource nur für die Übertragung von Informationen für ein bestimmtes Teilnehmergerät, in UMTS User Equipment (UE) genannt, reserviert. Bei den gemeinsamen Kanälen können Informationen übertragen werden, die für alle Teilnehmer gedacht sind oder nur für einen bestimmten Teilnehmer. Im letzteren Fall muss auf den gemeinsamen Kanal noch mit übertragen werden, für welchen Teilnehmer die Information gedacht ist.

Wichtig in der UMTS-Technik ist die Regelung der Sendeleistung sowohl bei der Uplink- als auch bei der Downlink-Übertragung. Stand der Technik ist die SIR-basierte (Signalto-Interference-Ratio), d.h. vom Störabstand abhängige, Leistungsregelung mit geschlossener Regelschleife, welche nachfolgend kurz erläutert wird (vgl. auch technische Spezifikation TS 25.214 V3.7.0: "Physical Layer Procedures", des 3rd Generation Partnership Projects - 3GGP). Das Mobilfunkgerät führt für die dedizierten Kanäle, die es empfängt, eine Schätzung des SIR-Wertes durch. Dieser Wert stellt ein Qualitätskriterium für das empfangene Signal dar. Durch Vergleich mit einem vorgegebenen Wert SIR_{target} wird ein Sende-Leistungs-Steuerbefehl, der sogenannte TPC-(Transmission Power Control) Befehl, erzeugt und das Ergebnis über einen Uplink-Kanal an die Basisstation gesendet. Der Wert für SIR_{target} wird dabei indirekt vom Netz für jede Mobilstation individuell so vorgegeben, dass für die jeweilige Verbindung eine ausreichende Qualität gewährleistet wird. Die TPC-Befehle sind reine 1-Bit-Informationen und liefern Informationen, ob das gemessene SIR unter oder oberhalb des vorgegebenen Wertes SIR_{target} liegt. Deshalb können die TPC-Befehle auch mit den Kommandos "UP", d.h. SIR liegt unterhalb SIR_{target}, und "DOWN ", d.h. SIR liegt oberhalb SIR_{target}, gleichgesetzt werden. Der Befehl "UP" bedeutet, dass die Empfangsqualität nicht ausreicht und deshalb am Sender eine Erhöhung der Sendeleistung notwendig ist. Umgekehrtes gilt für den "DOWN"-Befehl.

Bekannt ist ebenfalls die Verwendung eines gemeinsamen Steuerungskanals für die Übertragung in Downlink-Richtung. Der gemeinsame Steuerungskanal wird nachfolgend "PMcPWCH" (Physical Multicast Power Channel) genannt. Der Steuerungskanal kann von mehreren Mobilfunkstationen einer Multicast-Gruppe empfangen werden und den jeweiligen dedizierten physikalischen Steuerungskanal in Downlink-Richtung dieser Mobilfunkstationen ersetzen. Bei dem dedizierten physikalischen Steuerungskanal handelt es sich um den in UMTS bekannten sogenannten "DL-DPCCH" (Downlink - Dedicated Physical Control Channel). Dadurch können Kanal-Ressourcen bei der Downlink-Übertragung gespart werden. Nachfolgend bedeutet eine ein vorausgestelltes "DL" eine Übertragung in Downlink-Richtung und ein vorausgestelltes "UL" eine Übertragung in Uplink-Richtung.

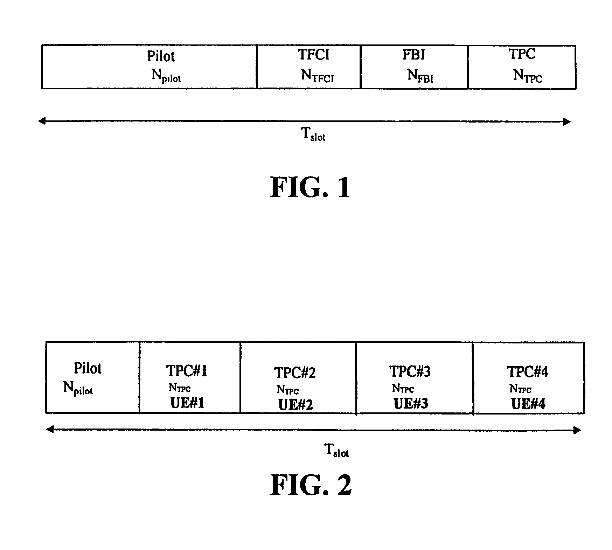

Figur 1 zeigt den Aufbau eines dedizierten physikalischen Steuerungskanals bei einer Übertragung in Uplink-Richtung (UL-DPCCH) nach dem Stand der Technik. N gibt dabei an, wie viele Bits für das entsprechende Feld zur Verfügung stehen. Der Zeitschlitz Tₛₗₒₜ hat die zeitliche Länge von 0,667 ms, die noch einmal in 2560 Chips eingeteilt werden. Dabei kann in dieser Sendefolge nur ein TPC-Befehl gesendet werden. Von links nach rechts zeigt Figur 1 ein Hauptfeld "Pilot", ein Transportformat-Kombinierungsindikator-Feld "TFCI" (Transport Formation Combination Indicator), ein Rückmeldungsinformations-Feld "FBI" (Feedback Information) und ein Leistungs-Übertragungs-Steuerbefehl-Feld "TPC".

Figur 2 zeigt den beispielhaften Aufbau des gemeinsamen Steuerungskanals PMcPWCH bei Downlink-Übertragung. Gleiche Bezeichnungen haben die gleiche Bedeutung wie in Figur 1. N gibt wiederum an, wie viele Bits für das entsprechende Feld zur Verfügung stehen, wobei der Zeitschlitz Tₛₗₒₜ die zeitliche Länge von 0,667 ms aufweist, die noch einmal in 2560 Chips eingeteilt werden. Die Mobilfunkstationen UE#1, UE#2, UE#3 und UE#4 erhalten über den gemeinsamen Kanal die vier TPC-Befehle TPC#1, TPC#2, TPC#3 bzw. TPC#4. Für jede der vier Mobilfunkstationen erfolgt die Leistungsregelung nach dem Stand der Technik wie folgt: Die Basisstation (NodeB) misst die Empfangsqualität des von den Mobilfunkstationen gesendeten dedizierten physikalischen Steuerungskanals in Uplink-Richtung (UL-DPCCH) und sendet daraufhin den entsprechenden TPC-Befehl auf dem gemeinsamen Kanal (PMcPWCH). Die Mobilfunkstation misst die Empfangsqualität des von der NodeB gesendeten gemeinsamen Kanals (PMcPWCH) und sendet daraufhin den entsprechenden TPC-Befehl auf dem dedizierten physikalischen Steuerungskanal in Uplink-Richtung (UL-DPCCH). Somit übernimmt der gemeinsame Steuerungskanal (PMcPWCH) Funktionen, die bei anderen bekannten Lösungen der dedizierte physikalische Steuerungskanal in Downlink-Richtung (DL-DPCCH) für die Mobilfunkstationen inne hat.

Probleme bei dem Stand der Technik ergeben sich jedoch, wenn eine Mobilfunkstation in mehr als eine Multicast-Gruppe eingeschrieben ist. In diesem Fall kann die Mobilfunkstation mehrere gemeinsame Steuerungskanäle (PMcPWCH)empfangen. Eine individuelle Steuerung der Sendeleistung für alle Kanäle ist dabei nicht möglich, da nach dem Stand der Technik nur ein TPC-Befehl in Uplink-Richtung gesendet wird. Dadurch ergeben sich unnötige Interferenzen bei der Übertragung in Downlink-Richtung, was zu verminderten Funk-Ressourcen bei der Downlink-Übertragung führt.

Somit liegt der vorliegenden Erfindung die Aufgabe zugrunde, eine System-Ressourcen sparende Steuerung der Sendeleistung bei der Übertragung von Gruppennachrichten unterschiedlicher Gruppen zur Verfügung zu stellen.

Diese Aufgabe wird durch ein Verfahren und ein System zur Steuerung der Sendeleistung bei der Übertragung von Gruppennachrichten unterschiedlicher Gruppen mit den Merkmalen der unabhängigen Ansprüche gelöst. Vorteilhafte Weiterbildungen der vorliegenden Erfindung ergeben sich aus den abhängigen Ansprüchen.

Das Verfahren zur Steuerung der Sendeleistung bei der Übertragung von Gruppennachrichten unterschiedlicher Gruppen in einem Mobilfunksystem, insbesondere UMTS, weist die Verfahrensschritte
- Senden jeweils eines gemeinsamen Steuerungskanals für jede Gruppe von einer Basisstation zumindest einer Mobilstation, wobei jeder gemeinsame Steuerungskanal Informationen hinsichtlich der Empfangsqualität enthält, und
- Auswerten der empfangenen gemeinsamen Steuerungskanäle in der Mobilstation, auf.

Von der Mobilstation wird für jede Gruppe ein Sendeleistungs-Steuerungsbefehl an die Basisstation gesendet. Bei den Gruppennachrichten handelt es sich bevorzugt um sogenannte Multicast-Nachrichten einer Multicast-Gruppe. In UMTS handelt es sich bei der Basisstation um eine sogenannte NodeB und bei den Mobilstationen bevorzugt um Mobilfunk-Endgeräte, welche in einem Mobilfunksystem der dritten Generation betrieben werden können. Mit dem Sendeleistungs-Steuerungs-Befehl kann die gewünschte Sendeleistung in Abhängigkeit von der angezeigten Empfangsqualität erhöht bzw. erniedrigt werden.

Bevorzugt werden die verschiedenen Sendeleistungs-Steuerungs-Befehle für jede Gruppe während einer Sendefolge, einem sogenannten "Burst" gesendet.

In einer Weiterbildung der vorliegenden Erfindung wird durch den Sendeleistungs-Steuerungs-Befehl die Sendeleistung des zugehörigen gemeinsamen Steuerungskanals gesteuert.

In einer Ausführungsform der vorliegenden Erfindung wird von einem Netzwerk bestimmt und der Mobilstation angezeigt und/oder von der Mobilstation bestimmt und einem Netzwerk angezeigt, welcher Sendeleistungs-Steuerungs-Befehl zu welchem gemeinsamen Steuerkanal gehört. Mit einer veränderten Anzahl von Multicast-Gruppen, in denen die Mobilfunkstationen eingeschrieben sind, verändert sich auch die Anzahl der Sendeleistungs-Steuerungs-Befehle bzw. Sendeleistungs-Steuerungs-Felder. Somit kann eine entsprechende Zuordnung vom Netzwerk an die Mobilfunkstationen bzw. von der Mobilfunkstation an das Netzwerk signalisiert werden. Bevorzugt werden mehrere Sendeleistungs-Steuerungs-Befehle in einer Sendefolge gesendet.

In einer Weiterbildung der vorliegenden Erfindung erfolgt eine Erhöhung der Anzahl der Sendeleistungs-Steuerungs-Befehle in einer Sendefolge, d.h. einem Burst, durch Veränderung der Feldlänge der Sendefolge und/oder Veränderung des Spreizfaktors und/oder Verwendung mehrerer Kanalisierungs-Codes.

Die vorliegende Erfindung betrifft auch ein System zur Steuerung der Sendeleistung bei der Übertragung von Gruppennachrichten unterschiedlicher Gruppen in einem Mobilfunksystem, insbesondere UMTS, aufweisend Mittel zum Senden jeweils eines gemeinsamen Steuerungskanals für jede Gruppe von einer BasisStation zumindest einer Mobilstation, wobei jeder gemeinsame Steuerungskanal Informationen hinsichtlich der Empfangsqualität enthält, und Mittel zum Auswerten der empfangenen gemeinsamen Steuerungskanäle in der Mobilstation, wobei von den Mobilstationen für jede Gruppe ein Sendeleistungs-Steuerungs-Befehl an die Basisstation gesendet wird.

Des Weiteren betrifft die vorliegende Erfindung eine Mobilstation zur Verwendung in einem erfindungsgemäßen Verfahren und/oder zur Verwendung in einem erfindungsgemäßen System.

Ein Vorteil der Erfindung ist, dass eine Mobilfunkstation die Sendeleistung jedes einzelnen gemeinsamen Steuerungskanals, den es empfängt, individuell regeln kann. Durch die individuelle Regelung der Sendeleistung der einzelnen gemeinsamen Steuerungskanäle werden unnötige Interferenzen bei der Übertragung in Downlink-Richtung vermieden, so dass kein erhöhter Verbrauch von Funk-Ressourcen bei der Übertragung in Downlink-Richtung erfolgt.

Die Erfindung wird im Folgenden unter Hinweis auf die beigefügten Zeichnungen anhand von Ausführungsbeispielen näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigen:
- Figur 1: einen dedizierte physikalische Steuerungs-Kanal bei Übertragung in Uplink-Richtung (UL-DPCCH) nach dem Stand der Technik;
- Figur 2: einen Steuerungs-Kanal (PMcPWCH) bei Downlink- Übertragung nach dem Stand der Technik;
- Figur 3: ein Ausführungsbeispiel eines dedizierten physika- lischen Steuerungskanals bei Übertragung in Uplink- Richtung (UL-DPCCH);
- Figur 4: einen dedizierten physikalischen Steuerungskanal bei einer Übertragung in Uplink-Richtung (UL-DPCCH) nach dem Stand der Technik und ein Ausführungsbei- spiel einer TPC-Sendefolge gemäß der vorliegenden Erfindung;
- Figur 5: einen dedizierten physikalischen Steuerungskanals bei einer Übertragung in Uplink-Richtung (UL-DPCCH) nach dem Stand der Technik und ein Ausführungsbei- spiel einer TPC-Sendefolge gemäß der vorliegenden Erfindung; und
- Figur 6: einen dedizierten physikalischen Steuerungskanals bei einer Übertragung in Uplink-Richtung (UL-DPCCH) nach dem Stand der Technik und ein Ausführungsbei- spiel einer TPC-Sendefolge gemäß der vorliegenden Erfindung.

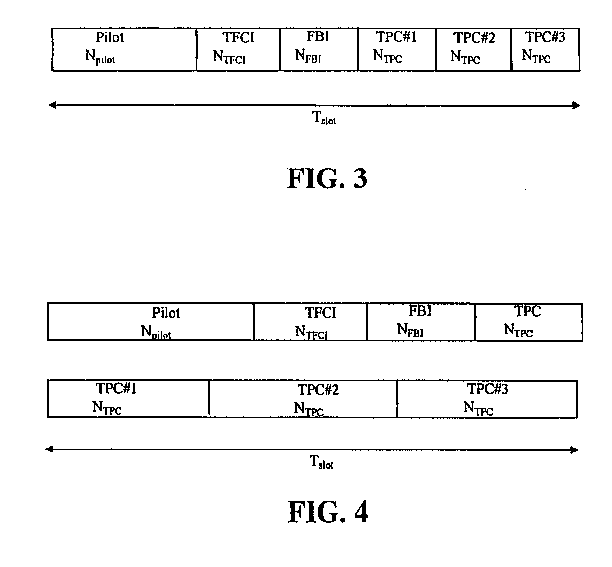

Die Figuren 1 und 2 wurden schon in der Einleitung der Beschreibung beschrieben und es wird auf diese Erläuterung verwiesen. Bei den nachfolgenden Beschreibungen der Figuren 3 bis 6 haben gleichlautende Bezeichnungen die bereits hinsichtlich der Figuren 1 und 2 erläuterten Bedeutungen.

In einem ersten Ausführungsbeispiel wird eine Mobilfunkstation betrachtet, die gleichzeitig in drei unterschiedliche Multicast-Gruppen MC#1, MC#2 und MC#3 eingeschrieben ist. Es wird angenommen, dass die Mobilfunkstation pro Multicast-Gruppe drei unterschiedliche gemeinsame Steuerungskanäle PMcPWCH#1, PMcPWCH#2 und PMcPWCH#3 empfängt. Will die Mobilfunkstation die Sendeleistung dieser drei unterschiedlichern gemeinsamen Steuerungskanäle regeln, so muss sie bei der Übertragung in Uplink-Richtung drei entsprechende und unterschiedliche Sendeleistungs-Steuerungs-Befehle TPC senden können. In Figur 3 ist ein entsprechendes Ausführungsbeispiel einer Sendefolge eines dedizierten physikalischen Steuerungskanals bei einer Übertragung in Uplink-Richtung UL-DPCCH gezeigt. N gibt dabei an, wie viel Bits für das entsprechende Feld zur Verfügung stehen. Der Zeitschlitz Tₛₗₒₜ hat die zeitliche Länge von 0,667 ms, die noch einmal in 2560 Chips eingeteilt werden. Mit der gezeigten Sendefolge können mehrere TPC-Befehle, die in Figur 3 jeweils mit N_{TPC} dargestellt sind, gesendet werden. Dabei ist TPC#1 der TPC-Befehl für den PMcPWCH#1, TPC#2 der TPC-Befehl für den PMcPWCH#2 und TPC#3 der TPC-Befehl für den PMcPWCH#3. Die Reihenfolge der einzelnen Felder, speziell der verschiedenen TPC-Felder, kann auch anders definiert sein. Mit einer veränderten Anzahl von Multicast-Gruppen, in denen die Mobilfunkstation eingeschrieben ist, verändert sich auch die Anzahl der TPC-Befehle bzw. TPC-Felder. Welcher TPC-Befehl zu welchem gemeinsamen Steuerungskanal gehört, kann zuvor vom Netzwerk bestimmt und der Mobilfunkstation bzw. von der Mobilfunkstation bestimmt und dem Netzwerk signalisiert werden.

In einem zweiten Ausführungsbeispiel wird von den gleichen Voraussetzungen wie bei dem ersten Ausführungsbeispiel ausgegangen. Die Mobilfunkstation muss dabei wiederum bei einer Übertragung in Uplink-Richtung drei entsprechende, unterschiedliche TPC-Befehle senden können. Dabei soll ein zusätzlicher Burst eingeführt werden, der parallel zum dedizierten physikalischen Steuerungskanal bei Übertragung in Uplink-Richtung UL-DPCCH mit Hilfe eines anderen Kanalisierungs-Codes, das heißt einem sogenannten "Channelization-Code". Figur 4 zeigt entsprechende Sendefolgen. Die obere Sendefolge zeigt einen dedizierten physikalischen Steuerungskanal bei einer Übertragung in Uplink-Richtung (UL-DPCCH) nach dem Stand der Technik. Die untere Sendefolge zeigt einen Burst gemäß der vorliegenden Erfindung. Mit diesem Burst, welcher parallel zum UL-DPCCH-Burst gesendet wird, können mehrere TPC-Befehle, welche in der Figur 4 jeweils mit der Anzahl N_{TPC} Bits dargestellt sind, gesendet werden. Dabei ist TPC#1 der TPC-Befehl für den gemeinsamen Steuerungskanal PMcPWCH#1, TPC#2 der TPC-Befehl für den gemeinsamen Steuerungskanal PMcPWCH#2, und TPC#3 der TPC-Befehl für den gemeinsamen Steuerungskanal PMcPWCH#3. Die Reihenfolge der einzelnen Felder, speziell der verschiedenen TPC-Felder, kann auch anders definiert sein. Vorteilhaft dabei ist, dass die Burst-Struktur des dedizierten physikalischen Steuerungskanals bei der Übertragung in Uplink-Richtung (UL-DPCCH) nicht modifiziert werden muss. Dabei verändert sich mit einer veränderten Anzahl von Multicast-Gruppen, in denen die Mobilfunkstation eingeschrieben ist, auch die Anzahl der TPC-Befehle bzw. TPC-Felder. Welcher TPC-Befehl zu welchem gemeinsamen Steuerungskanal PMcPWCH gehört, kann ebenfalls zuvor vom Netzwerk bestimmt und den Mobilfunkstationen signalisiert werden bzw. von den Mobilfunkstationen bestimmt und dem Netzwerk signalisiert werden. In dem vorliegenden Ausführungsbeispiel hat das TPC-Feld in dem dedizierten physikalischen Steuerungskanal bei einer Übertragung in Uplink-Richtung (UL-DPCCH) keine Funktion mehr. Nach dem Stand der Technik hatte es die Aufgabe, die Sendeleistung des zugehörigen DPCCHs in Downlink-Richtung zu regeln. Dieser DPCCH in Downlink-Richtung existiert im vorliegenden Ausführungsbeispiel nicht mehr, da er durch den gemeinsamen Steuerungskanal PMcPWCH ersetzt wird.

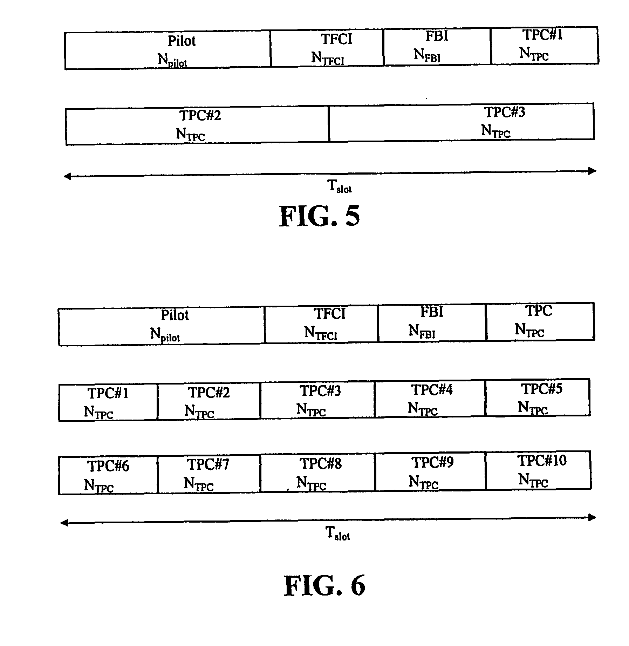

In einem dritten Ausführungsbeispiel wird von den gleichen Voraussetzungen wie bei dem ersten und zweiten Ausführungsbeispiel ausgegangen. Die Mobilfunkstation überträgt in Uplink-Richtung drei TPC-Befehle. Das dritte Ausführungsbeispiel ist eine Kombination des ersten und zweiten Ausführungsbeispiels. Wie in Zusammenhang mit dem zweiten Ausführungsbeispiel bereits erläutert wurde, hat das TPC-Feld bei dem UL-DPCCH-Burst keine Funktion mehr. Dieses Feld kann eine Funktion enthalten, in dem es den TPC-Befehl für einen der drei gemeinsamen Kanäle PMcPWCH trägt, beispielsweise für PMcPWCH#1. Dabei muss die Burst-Struktur des UL-DPCCH nicht modifiziert werden. Figur 5 zeigt eine entsprechende Modifizierung. Dabei zeigt die oben dargestellte Sendefolge einen dedizierten physikalischen Steuerungskanal bei einer Übertragung in Uplink-Richtung (UL-DPCCH) nach dem Stand der Technik. Im dem darunter dargestellten TPC-Burst wird innerhalb des Zeitschlitzes Tₛₗₒₜ = 2560 Chips ein TPC-Befehl weniger benötigt.

Mit der Anzahl der Multicast-Gruppen, in denen die Mobilfunkstation eingeschrieben ist, ändert sich auch die Anzahl der TPC-Befehle, und damit auch die Anzahl der benötigten Bits, die in den modifizierten Sendefolgen unterkommen müssen. Zur Erhöhung der Anzahl der TPC-Befehle ist es möglich, die Feldlängen N zu modifizieren. Bei bekannter Aufteilung ist der Spreizfaktor für den dedizierten physikalischen Steuerungskanal bei einer Übertragung in Uplink-Richtung 256, d.h. pro Sendefolge können zehn Bits untergebracht werden. Die Aufteilung gemäß Figur 1 kann beispielsweise wie folgt lauten: Nₚᵢ₋ₗₒₜ = 6, N_{TFCI} = 2, N_{FBI} = 0 und N_{TPC} = 2. Vorausgesetzt, man ist in zwei Multicast-Gruppen eingeschrieben, so benötigt man, wie dies in Figur 3 dargestellt ist, zwei TPC-Felder im dedizierten physikalischen Steuerungskanal in Uplink-Richtung (UL-DPCCH). Dabei könnte die Aufteilung beispielsweise Nₚᵢₗₒₜ = 6, N_{TFCI} = 2, N_{FBI} = 0 und N_{TPC} = 1 sein. Bei einer Einschreibung in drei oder vier Multicast-Gruppen wäre eine Aufteilung des dedizierten physikalischen Steuerungskanals in Uplink-Richtung (UL-DPCCH) wie folgt denkbar: Nₚᵢₗₒₜ = 4, N_{TFCI} = 2, N_{FBI} = 0 und N_{TPC} = 1.

Des Weiteren besteht die Möglichkeit, um sämtliche benötigte TPC-Befehle in einer Sendefolge unterzubringen, den Spreizfaktor zu modifizieren. Halbiert man beispielsweise den Spreizfaktor, so stehen doppelt so viele Bits pro Sendefolge, d.h. Burst, zur Verfügung. Wird beispielsweise in Figur 3 der Spreizfaktor mit 128 festgelegt, so hat man pro Sendefolge 20 Bits zur Verfügung. Beide Vorgehensweisen, d.h. Modifizierung der Feldlängen N und Modifizierung des Spreizfaktors können auch in Kombination angewendet werden.

Darüber hinaus besteht auch die Möglichkeit, mehrere Kanalisierungs-Codes, sogenannte "Channelization Codes", zu verwenden. Wie aus den Figuren 4 und 5 ersichtlich ist, wird darin ein zusätzlicher Kanalisierungs-Code zur Übertragung der TPC-Befehle verwendet. Sollte auch dieser nicht mehr ausreichen, um alle TPC-Befehle unterzubringen, so kann ein weiterer Kanalisierungs-Code eingeführt werden. Angenommen, das Ausführungsbeispiel gemäß Abbildung 4 wird derart erweitert, dass die Mobilfunkstation in zehn Multicast-Gruppen eingeschrieben ist und somit gleichzeitig die Sendeleistung von zehn gemeinsamen Steuerungskanälen (PMcPWCH) regeln muss, dann könnte dies nicht nur über einen, sondern über zwei Kanalisierungs-Codes erfolgen. Eine entsprechende Aufteilung ist in Figur 6 dargestellt. Die oberste Sendefolge zeigt dabei wie in Figur 5 einen dedizierten physikalischen Steuerungskanal bei einer Übertragung in Uplink-Richtung (UL-DPCCH) nach dem Stand der Technik. Eine Kombination der Verwendung mehrerer Kanalisierungs-Codes mit einer Modifizierung der Feldlängen N und des Spreizfaktors ist denkbar.

## Patentansprüche

1. Verfahren zur Steuerung der Sendeleistung bei der Übertragung von Gruppennachrichten unterschiedlicher Gruppen in einem Mobilfunksystem, insbesondere UMTS, aufweisend die Verfahrensschritte:
- Senden jeweils eines gemeinsamen Steuerungskanals, PMcPWCH, für jede Gruppe von einer Basisstation zu mindestens einer Mobilstation, wobei jeder gemeinsame Steuerungskanal Informationen hinsichtlich der Empfangsqualität enthält; und
- Auswerten der empfangenen gemeinsamen Steuerungskanäle in der Mobilstation;
**dadurch gekennzeichnet, dass** von der Mobilstation für jede Gruppe in die die Mobilstation eingeschrieben ist ein Sendeleistungssteuerungs-Befehl, TPC, an die Basisstation gesendet wird.

2. Verfahren nach Anspruch 1,
**dadurch gekennzeichnet, dass** die verschiedenen sendeleistungssteuerungs-Befehle, TPC, für jede Gruppe während einer Sendefolge gesendet werden.

3. Verfahren nach Anspruch 1 oder 2,
**dadurch gekennzeichnet, dass** durch den Sendeleistungssteuerungs-Befehl, TPC, die Sendeleistung des zugehörigen gemeinsamen Steuerungskanals, PMcPWCH, gesteuert wird.

4. Verfahren nach einem der vorhergehenden Ansprüche,
**dadurch gekennzeichnet, dass** von einem Netzwerk bestimmt und der Mobilstation angezeigt wird und/oder von der Mobilstation bestimmt und einem Netzwerk angezeigt wird, welcher Sendeleistungssteuerungs-Befehl, TPC, zu welchem gemeinsamen Steuerungskanal, PMcPWCH, gehört.

5. Verfahren nach einem der vorhergehenden Ansprüche,
**dadurch gekennzeichnet, dass** mehrere Sendeleistungssteuerungs-Befehle, TPC, in einer Sendefolge gesendet werden.

6. Verfahren nach einem der vorhergehenden Ansprüche,
**dadurch gekennzeichnet, dass** eine Erhöhung der Anzahl der Sendeleistungssteuerungs-Befehle, TPC, in einer Sendefolge durch Veränderung der Feldlänge der Sendefolge und/oder Veränderung des Spreizfaktors und/oder Verwendung mehrerer Kanalisierungscodes erfolgt.

7. System zur Steuerung der Sendeleistung bei der Übertragung von Gruppennachrichten unterschiedlicher Gruppen in einem Mobilfunksystem, insbesondere UMTS, aufweisend:
- Mittel zum Senden jeweils eines gemeinsamen Steuerungskanals, PMcPWCH, für jede Gruppe von einer Basisstation zu mindestens einer Mobilstation, wobei jeder gemeinsame Steuerungskanal Informationen hinsichtlich der Empfangsqualität enthält; und
- Mittel zum Auswerten der empfangenen gemeinsamen Steuerungskanäle in der Mobilstation;
**dadurch gekennzeichnet, dass** von der Mobilstation für jede Gruppe in die die Mobilstation eingeschrieben ist ein Sendeleistungssteuerungs-Befehl, TPC, an die Basisstation gesendet wird.

8. System nach Anspruch 7,
**dadurch gekennzeichnet, dass** die verschiedenen Sendeleistungssteuerungs-Befehle, TPC, für jede Gruppe während einer Sendefolge gesendet werden.

9. System nach Anspruch 7 oder 8,
**dadurch gekennzeichnet, dass** durch den Sendeleistungssteuerungs-Befehl, TPC, die Sendeleistung des zugehörigen gemeinsamen Steuerungskanals, PMcPWCH, gesteuert wird.

10. System nach einem der Ansprüche 7 bis 9,
**dadurch gekennzeichnet, dass** von einem Netzwerk bestimmt und der Mobilstation angezeigt wird und/oder von der Mobilstation bestimmt und einem Netzwerk angezeigt wird, welcher Sendeleistungssteuerungs-Befehl, TPC, zu welchem gemeinsamen Steuerungskanal, PMcPWCH, gehört.

11. System nach einem der Ansprüche 7 bis 10,
**dadurch gekennzeichnet, dass** mehrere Sendeleistungssteuerungs-Befehle, TPC, in einer Sendefolge gesendet werden.

12. System nach einem der Ansprüche 7 bis 11,
**dadurch gekennzeichnet, dass** eine Erhöhung der Anzahl der Sendeleistungssteuerungs-Befehle, TPC, in einer Sendefolge durch Veränderung der Feldlänge der Sendefolge und/oder Veränderung des Spreizfaktors und/oder Verwendung mehrerer Kanalisierungscodes erfolgt.

13. Mobilstation zur Verwendung in einem Verfahren nach einem
der Ansprüche 1 bis 6 und/oder zur Verwendung in einem System nach einem der Ansprüche 7 bis 12.

## Claims

1. Method for controlling the transmission power during the transmission of group messages of different groups in a mobile communications system, in particular UMTS, having the method steps of:
- sending a common control channel, PMcPWCH, in each case for each group from a base station to at least one mobile station, with each common control channel containing information in respect of the reception quality; and
- evaluating the received common control channels in the mobile station;
**characterised in that**
a transmission power control command, TPC, is sent by the mobile station to the base station for each group in which the mobile station is registered.

2. Method according to claim 1,
**characterised in that**
the different transmission power control commands, TPC, for each group are sent during a transmission sequence.

3. Method according to claim 1 or 2,
**characterised in that**
the transmission power of the associated common control channel, PMcPWCH, is controlled by means of the transmission power control command, TPC.

4. Method according to one of the preceding claims,
**characterised in that**
it is determined by a network and signalled to the mobile station and/or determined by the mobile station and signalled to a network, which transmission power control command, TPC, belongs to which common control channel, PMcPWCH.

5. Method according to one of the preceding claims,
**characterised in that**
a plurality of transmission power control commands, TPC, are sent in a transmission sequence.

6. Method according to one of the preceding claims,
**characterised in that**
the number of transmission power control commands, TPC, in a transmission sequence is increased by modifying the field length of the transmission sequence and/or changing the spreading factor and/or using a plurality of channelization codes.

7. System for controlling the transmission power during the transmission of group messages of different groups in a mobile communications system, in particular UMTS, having:
- means for sending a common control channel, PMcPWCH, in each case for each group from a base station to at least one mobile station, with each common control channel containing information in respect of the reception quality; and
- means for evaluating the received common control channels in the mobile station
**characterised in that**
a transmission power control command, TPC, is sent to the base station by the mobile station for each group in which the mobile station is registered.

8. System according to claim 7,
**characterised in that**
the different transmission power control commands, TPC, for each group are sent during a transmission sequence.

9. System according to claim 7 or 8,
**characterised in that**
the transmission power of the associated common control channel, PMcPWCH, is controlled by means of the transmission power control command, TPC.

10. System according to one of claims 7 to 9,
**characterised in that**
it is determined by a network and signalled to the mobile station and/or determined by the mobile station and signalled to a network, which transmission power control command, TPC, belongs to which common control channel, PMcPWCH.

11. System according to one of claims 7 to 10,
**characterised in that**
a plurality of transmission power control commands, TPC, are sent in a transmission sequence.

12. System according to one of claims 7 to 11,
**characterised in that**
the number of transmission power control commands, TPC, in a transmission sequence is increased by modifying the field length of the transmission sequence and/or changing the spreading factor and/or using a plurality of channelization codes.

13. Mobile station for use in a method according to one of claims 1 to 6 and/or for use in a system according to one of claims 7 to 12.

## Revendications

1. Procédé de commande de la puissance d'émission lors de la transmission de messages de groupes de différents groupes dans un système radio mobile, et plus particulièrement un UMTS, comportant les étapes suivantes :
- envoi de respectivement un canal de commande commun PMcPWCH, pour chaque groupe, d'une station de base vers au moins une station mobile, chaque canal de commande commun contenant des informations relatives à la qualité de réception, et
- évaluation des canaux de commande commun reçus dans la station mobile,
**caractérisé en ce qu'**un ordre de commande de puissance d'émission TPC est envoyé de la station mobile vers la station de base pour chaque groupe dans lequel la station mobile est inscrite.

2. Procédé selon la revendication 1, **caractérisé en ce que** les différents ordres de commande de puissance d'émission TPC sont émis, pour chaque groupe, pendant une séquence d'émission.

3. Procédé selon la revendication 1 ou 2, **caractérisé en ce qu'**est commandée, par l'ordre de commande de puissance d'émission TPC, la puissance d'émission du canal de commande commun associé PMcPWCH.

4. Procédé selon l'une des revendications précédentes, **caractérisé en ce qu'**il est déterminé par un réseau et signalé à la station mobile et/ou il est déterminé par la station mobile et signalé à un réseau quel ordre de commande de puissance d'émission TPC est associé à quel canal de commande commun PMcPWCH.

5. Procédé selon l'une des revendications précédentes, **caractérisé en ce que** plusieurs ordres de commande de puissance d'émission TPC sont émis dans une séquence d'émission.

6. Procédé selon l'une des revendications précédentes, **caractérisé en ce qu'**une augmentation du nombre des ordres de commande de puissance d'émission TPC dans une séquence d'émission se produit par modification de la longueur de champ de la séquence d'émission et/ou par modification du facteur d'étalement et/ou par utilisation de plusieurs codes de canalisation.

7. Système de commande de la puissance d'émission lors de la transmission de messages de groupes de différents groupes dans un système radio mobile, et plus particulièrement un UMTS, comportant :
- des moyens pour envoyer respectivement un canal de commande commun PMcPWCH, pour chaque groupe, d'une station de base vers au moins une station mobile, chaque canal de commande commun contenant des informations relatives à la qualité de réception, et
- des moyens d'évaluation des canaux de commande commun reçus dans la station mobile,
**caractérisé en ce qu'**un ordre de commande de puissance d'émission TPC est envoyé de la station mobile vers la station de base pour chaque groupe dans lequel la station mobile est inscrite.

8. Système selon la revendication 7, **caractérisé en ce que** les différents ordres de commande de puissance d'émission TPC sont émis, pour chaque groupe, pendant une séquence d'émission.

9. Système selon la revendication 7 ou 8, **caractérisé en ce qu'**est commandée, par l'ordre de commande de puissance d'émission TPC, la puissance d'émission du canal de commande commun associé PMcPWCH.

10. Système selon l'une des revendications 7 à 9, **caractérisé en ce qu'**il est déterminé par un réseau et signalé à la station mobile et/ou déterminé par la station mobile et signalé à un réseau quel ordre de commande de puissance d'émission TPC est associé à quel canal de commande commun PMcPWCH.

11. Système selon l'une des revendications 7 à 10, **caractérisé en ce que** plusieurs ordres de commande de puissance d'émission TPC sont émis dans une séquence d'émission.

12. Système selon l'une des revendications 7 à 11, **caractérisé en ce qu'**une augmentation du nombre des ordres de commande de puissance d'émission TPC dans une séquence d'émission se produit par modification de la longueur de champ de la séquence d'émission et/ou par modification du facteur d'étalement et/ou par utilisation de plusieurs codes de canalisation.

13. Station mobile destinée à être utilisée dans un procédé selon l'une des revendications 1 à 6 et/ou destinée à être utilisée dans un système selon l'une des revendications 7 à 12.
